# EUROPEAN PATENT APPLICATION

(11) **EP 3 556 225 A1**
(43) Date of publication of application: **23.10.2019**
(21) Application number: 17885093.9
(22) Date of filing: 09.03.2017
(51) Int. Cl.: A23L 29/30, A23L 2/00, A23L 2/60, A23L 27/00, C13K 11/00

(54) **LIQUID SWEETENER COMPOSITION, METHOD FOR PRODUCING SAME AND BEVERAGE**

(30) Priority: 19.12.2016 JP 2016245957
(71) Applicant: Japan Corn Starch Co., Ltd., Tokyo 107-0052 (JP)
(72) Inventor: HAMANO Takahito, Hekinan-shi Aichi 447-8608 (JP); HATASA Yukinori, Hekinan-shi Aichi 447-8608 (JP)
(74) Representative: Richly & Ritschel Patentanwälte PartG mbB
(86) International application number: PCT/JP2017/009464
(87) International publication number: WO 2018/116489

(57) **Abstract**

The present invention relates to a liquid sweetener composition including a solid content composed of fructose, glucose, a disaccharide and a saccharide other than fructose, glucose and disaccharides, and water, wherein the liquid sweetener composition contains 75% by mass or more of the solid content and 25% by mass or less of the water with respect to a total mass of the liquid sweetener composition, and contains 96.0 to 98.5% by mass of the fructose, 0.4 to 1.6% by mass of the glucose, 0.3 to 1.2% by mass of the disaccharide, and 0 to 1.2% by mass of the saccharide other than fructose, glucose and disaccharides, with respect to a total mass of the solid content.

## Description

### TECHNICAL FIELD

The present invention relates to a liquid sweetener composition having sweetness qualities equivalent to those of crystalline fructose, a production method thereof, and a beverage containing the liquid sweetener composition.

Priority is claimed on Japanese Patent Application No. 2016-245957, filed December 19, 2016, the content of which is incorporated herein by reference.

### BACKGROUND ART

Fructose is a saccharide that provides a strong sweet taste impression at low temperatures, and has a sweetness about 1.5 times as high as that of sugar at low temperatures. In addition, with regard to sweetness qualities, it has a feature of bringing sweetness and sharpness faster than sugar. Therefore, fructose is highly suitable as a raw material for food and drink such as soft drinks that are required to bring a pleasant cooling sensation at low temperatures, and is widely used in the production of food and drink.

Crystalline fructose is crystalline sugar made up 100% of fructose. For an industrial production method thereof, for example, the following processes are necessary. That is, a starch is treated with a hydrolase to obtain glucose, a portion of the glucose is isomerized with an isomerase (glucose isomerase) and converted to fructose to produce a liquid sugar known as an isomerized sugar. The liquid sugar is refined by a process such as chromatography, including ion exchange chromatography, desalination, filtration and concentration to increase the fructose purity and produce high fructose liquid sugar and the like. Furthermore, it can be produced through a crystallization step in which pure fructose crystals are used as seed crystals and fructose is crystallized from the high fructose liquid sugar. Since the fructose crystallization step requires equipment which is completely different from the facility for purifying isomerized sugar to produce isomerized sugar products such as glucose fructose liquid sugar, fructose glucose liquid sugar and high fructose liquid sugar, and also requires a multistep process, relatively large cost is required for the production of crystalline fructose. Accordingly, it is preferable to provide a sweetener composition which can be produced at a lower cost using the conventional facility for producing an isomerized sugar product, and which has sweetness qualities equivalent to those of crystalline fructose and therefore can be used as a substitute for crystalline fructose.

### SUMMARY OF THE INVENTION

### PROBLEMS TO BE SOLVED BY THE INVENTION

However, there is no known method for producing a sweetener composition having sweetness qualities equivalent to those of crystalline fructose in the conventional facility for producing an isomerized sugar product.

The present invention has been made in view of the above circumstances, and has an object of providing a liquid sweetener composition having sweetness qualities equivalent to those of crystalline fructose in the conventional facility for producing an isomerized sugar product.

### MEANS TO SOLVE THE PROBLEMS

Accordingly, the inventors of the present invention conducted intensive studies on the sweetness qualities of crystalline fructose and the influence of sugar other than fructose on the sweetness qualities. As a result, it was found that glucose coexisting with fructose causes a delay in the development of the sweetness of fructose, and a disaccharide coexisting with fructose causes a delay in the disappearance of the sweetness of fructose. Furthermore, they also discovered that by controlling the contents of fructose, glucose and a disaccharide in a liquid sweetener composition containing fructose, glucose and the disaccharide within specific ranges, such a liquid sweetener composition has sweetness qualities equivalent to those of crystalline fructose composed of 100% fructose, and such a liquid sweetener composition can be produced in the conventional facility for producing an isomerized sugar product, thereby completing the present invention.

The present invention includes the following aspects.
(1) A liquid sweetener composition including a solid content composed of fructose, glucose, a disaccharide and a saccharide other than fructose, glucose and disaccharides, and water, wherein the aforementioned liquid sweetener composition includes 75% by mass or more of the aforementioned solid content and 25% by mass or less of the aforementioned water with respect to a total mass of the aforementioned liquid sweetener composition, and includes 96.0 to 98.5% by mass of the aforementioned fructose, 0.4 to 1.6% by mass of the aforementioned glucose, 0.3 to 1.2% by mass of the aforementioned disaccharide, and 0 to 1.2% by mass of the aforementioned saccharide other than fructose, glucose and disaccharides, with respect to a total mass of the aforementioned solid content.
(2) The liquid sweetener composition according to (1), including 97.0 to 98.5% by mass of the aforementioned fructose, 0.4 to 1.2% by mass of the aforementioned glucose, 0.3 to 0.6% by mass of the aforementioned disaccharide and 0 to 1.2% by mass of the aforementioned saccharide other than fructose, glucose and disaccharides, with respect to a total mass of the aforementioned solid content.
(3) The liquid sweetener composition according to (1) or (2), wherein the aforementioned disaccharide is a saccharide containing maltose as a main component.
(4) A method for producing a liquid sweetener composition which is a method for producing the liquid sweetener composition according to (1), the method including a step of passing a raw sugar including a solid composed of fructose, glucose, a disaccharide and a saccharide other than fructose, glucose and disaccharides and containing less than 97.0% by mass of the aforementioned fructose, more than 1.6% by mass of the aforementioned glucose, more than 0.3% by mass of the aforementioned disaccharide, and more than 0% by mass of the aforementioned saccharide other than fructose, glucose and a disaccharide, with respect to a total mass of the aforementioned solid through a first cation exchange resin to obtain an eluent containing the aforementioned solid; a step of reducing minerals by treating the eluent containing the aforementioned solid with a mixed resin of a second cation exchange resin and an anion exchange resin; a step of obtaining a filtrate containing 96.0 to 98.5% by mass of the aforementioned fructose, 0.4 to 1.6% by mass of the aforementioned glucose, 0.3 to 1.2% by mass of the aforementioned disaccharide, and 0 to 1.2% by mass of the aforementioned saccharide other than fructose, glucose and a disaccharide with respect to a total mass of the aforementioned solid content by treating the eluent containing the aforementioned solid content with a reduced amount of the aforementioned minerals with diatomaceous earth and activated carbon, followed by filtration; and a step of concentrating the aforementioned filtrate.
(5) A soft drink containing the liquid sweetener composition according to any one of (1) to (3) as a solid content in an amount of 0.1 to 10% by mass of a total mass of the soft drink.
(6) A sports drink containing the liquid sweetener composition according to any one of (1) to (3) as a solid content in an amount of 0.1 to 10% by mass of a total mass of the sports drink.
(7) A carbonated beverage containing the liquid sweetener composition according to any one of (1) to (3) as a solid content in an amount of 0.1 to 10% by mass of a total mass of the carbonated beverage.

### EFFECTS OF THE INVENTION

By controlling the contents of fructose, glucose and a disaccharide in the liquid sweetener composition containing fructose, glucose and the disaccharide within specific ranges in the conventional facility for producing an isomerized sugar product, a liquid sweetener composition having sweetness qualities equivalent to those of crystalline fructose composed of 100% fructose can be produced at low cost.

### BRIEF DESCRIPTION OF THE DRAWINGS

FIG. 1 is a graph showing the effect of glucose on a sweetness quality.
FIG. 2 is a graph showing the effect of a disaccharide on a sweetness quality.
FIG. 3 is a graph showing the effect of a saccharide other than fructose, glucose and disaccharides on a sweetness quality.
FIG. 4 is a graph comparing the sweetness quality of a liquid sweetener composition of one embodiment of the present invention and the sweetness quality of crystalline fructose.

### EMBODIMENTS FOR CARRYING OUT THE INVENTION

### <Liquid sweetener composition>

One aspect of the present invention is a liquid sweetener composition including solid content composed of fructose, glucose, a disaccharide and a saccharide other than fructose, glucose and disaccharides, and water, wherein the aforementioned liquid sweetener composition contains 75% by mass or more of the aforementioned solid content and 25% by mass or less of the aforementioned water with respect to the total mass of the aforementioned liquid sweetener composition, and contains 96.0 to 98.5% by mass of the aforementioned fructose, 0.4 to 1.6% by mass of the aforementioned glucose, 0.3 to 1.2% by mass of the aforementioned disaccharide, and 0 to 1.2% by mass of the aforementioned saccharide other than fructose, glucose and disaccharides, with respect to the total mass of the aforementioned solid content.

In the present specification, examples of the "disaccharide" include maltose, sucrose, lactose, cellobiose and the like, among which maltose and the like are preferable.

In the present specification, the "saccharide other than fructose, glucose and disaccharides" means "reducing sugar other than fructose, glucose and disaccharides", and examples thereof include monosaccharides other than fructose and glucose or trisaccharides and other oligosaccharides, and more specifically, for example, nigerotriose, maltotriose, nigerotetraose and the like can be mentioned.

In the present specification, the "solid content" means a substance in a state where water has been removed (that is, containing no water). The above substance may be composed of a single component or may be a composition composed of two or more components. In addition, in the present specification, when expressed as "solid content", there is no need to exist in a state in which water is actually removed, and the solid content may contain water or be dissolved in water, or the solid content may be present in a state of being dispersed or mixed in water. However, it is used as a term only referring to a substance excluding water. Therefore, the "solid content composed of fructose, glucose, a disaccharide and a saccharide other than fructose, glucose and disaccharides" refer to a saccharide composition containing fructose, glucose, a disaccharide and a saccharide other than fructose, glucose and disaccharides, in a state in which water is removed. Such a solid content may contain other components than fructose, glucose, a disaccharides, and a saccharide other than fructose, glucose and disaccharides as long as they do not adversely affect the sweetness qualities, but they are preferably composed only of fructose, glucose, a disaccharides, and a saccharide other than fructose, glucose and disaccharides.

That is, in the "liquid sweetener composition" of the present invention, the sum of the contents of fructose, glucose, a disaccharide and a saccharide other than fructose, glucose and disaccharides in the aforementioned solid content does not exceed 100% by mass, but it is preferably 100% by mass, with respect to the total mass of the aforementioned solid content.

In the present specification, each content of fructose, glucose, a disaccharide, or a saccharide other than fructose, glucose and disaccharides can be measured by, for example, high performance liquid chromatography under the measurement conditions described in the examples.

Examples of components other than fructose, glucose, a disaccharide and a saccharide other than fructose, glucose and disaccharides include minerals such as potassium, calcium, iron, copper, sodium and magnesium.

When the aforementioned solid content contains a component other than fructose, glucose, a disaccharide and a saccharide other than fructose, glucose and disaccharides, the content thereof is preferably more than 0% by mass and 0.05% by mass or less, and more preferably more than 0% by mass and 0.02% by mass or less with respect to the total mass of the aforementioned solid content. The content of the minerals can be measured, for example, according to a known dry ashing method.

One aspect of the "liquid sweetener composition" of the present invention is a liquid sweetener composition containing 75% by mass or more of the solid content and 25% by mass or less of the water, with respect to the total mass of the liquid sweetener composition.

Another aspect of the "liquid sweetener composition" of the present invention is a liquid sweetener composition containing 75 to 100% by mass of the solid fraction and 0 to 25% by mass of the water, with respect to the total mass of the liquid sweetener composition.

Another aspect of the "liquid sweetener composition" of the present invention is a liquid sweetener composition containing 75 to 85% by mass of the solid fraction and 15 to 25% by mass of the water with respect to the total mass of the liquid sweetener composition.

Still another aspect of the "liquid sweetener composition" of the present invention is a liquid sweetener composition containing 75 to 80% by mass of the solid fraction and 20 to 25% by mass of the water with respect to the total mass of the liquid sweetener composition.

When the solid fraction and water are within the above ranges, it is convenient for use as a substitute for crystalline fructose. It should be noted that in the "liquid sweetener composition" of the present invention, the sum of the contents of the solid fraction and the water does not exceed 100% by mass with respect to the total mass of the liquid sweetener composition. In addition, the "liquid sweetener composition" of the present invention may contain impurities which cannot be substantially separated as long as the sweetness qualities are not affected. The content of the above "impurities which cannot be substantially separated" is preferably 50 ppm or less, and may be 0 ppm, with respect to the total mass of the liquid sweetener composition.

One aspect of the "liquid sweetener composition" of the present invention contains 96.0 to 98.5% by mass of the fructose, 0.4 to 1.6% by mass of the glucose, 0.3 to 1.2% by mass of the disaccharide and 0 to 1.2% by mass of the saccharide other than fructose, glucose and disaccharides, with respect to the total mass of the solid fraction.

Another aspect of the "liquid sweetener composition" of the present invention contains 97.0 to 98.5% by mass of the fructose, 0.4 to 1.2% by mass of the glucose, 0.3 to 0.6% by mass of the disaccharide and 0 to 1.2% by mass of the saccharide other than fructose, glucose and disaccharides with respect to the total mass of the solid fraction.

In the present specification, the expression "containing 0 to X% by mass" means that a component of interest is either not contained or contained in an amount of more than 0% by mass and X% by mass or less. Therefore, for example, the expression "containing 0 to 25% by mass of water" means that either water is not contained or water is contained in an amount of more than 0% by mass and 25% by mass or less, and the expression "containing 0 to 1.2% by mass of the saccharide other than fructose, glucose and disaccharides" means that either the saccharide other than fructose, glucose and disaccharides is not contained or the saccharide other than fructose, glucose and disaccharides is contained in an amount of more than 0% by mass and 1.2% by mass or less.

In the "liquid sweetener composition" of the present invention, the presence of glucose has an influence on the speed of onset of the sweetness of fructose, and as the content of glucose increases, the onset of the sweetness of the liquid sweetener composition tends to be delayed. In the "liquid sweetener composition" of the present invention, the presence of the disaccharide has an influence on the sharpness (disappearance speed) of sweetness, and as the content of the disaccharide increases, disappearance of the sweetness of the liquid sweetener composition tends to be delayed. In the "liquid sweetener composition" of the present invention, the presence of the saccharide other than fructose, glucose and disaccharides has less influence on the sweetness qualities as compared with the above-mentioned glucose and disaccharide. Therefore, in the "liquid sweetener composition" of the present invention, as the contents of glucose and disaccharide are reduced, the sweetness qualities become closer to those of crystalline fructose. However, in view of the purpose of providing a liquid sweetener composition having sweetness qualities equivalent to those of crystalline fructose while suppressing the production cost, the contents of glucose and disaccharide need not be reduced more than necessary, and are preferably controlled in a specific range sufficient to achieve the equivalent sweetness qualities to those of crystalline fructose.

As long as the contents of the above-mentioned fructose, glucose, disaccharide, and saccharide other than fructose, glucose and disaccharides are within the above ranges with respect to the total mass of the solid fraction, the "liquid sweetener composition" of the present invention has the equivalent sweetness qualities to those of crystalline fructose, which is also preferable from the viewpoint of production cost.

In still another aspect of the "liquid sweetener composition" of the present invention, the aforementioned disaccharide is a saccharide containing maltose as a main component. From the viewpoint of adjusting the sweetness quality of the "liquid sweetener composition" of the present invention, it is preferable that the aforementioned disaccharide is a saccharide containing maltose as a main component.

In the present specification, the phrase "contain as a main component" means that the content is 60% by mass or more, more preferably 80% by mass or more, still more preferably 90% by mass or more, particularly preferably 95% by mass or more, and may be 100% by mass, with respect to the total mass of an object of interest. Therefore, the description "the aforementioned disaccharide contains maltose as a main component" means that the content of maltose is at least 60% by mass, more preferably at least 80% by mass, still more preferably at least 90% by mass, particularly preferably at least 95% by mass, and may be 100% by mass with respect to the total mass of the aforementioned disaccharide.

### <Method for producing liquid sweetener composition>

The "liquid sweetener composition" of the present invention itself can be produced by blending each component contained in the liquid sweetener composition so as to achieve a predetermined content. Each component can be produced by a known method, or a commercially available product may be used.

However, in view of the object of the present invention, which is to provide a liquid sweetener composition having sweetness qualities equivalent to those of crystalline fructose in the conventional facility for producing an isomerized sugar product, it is preferable to produce by the following production method.

The "liquid sweetener composition" of the present invention can be produced by sequentially conducting:
(i) a step of passing a raw sugar including a solid fraction composed of fructose, glucose, a disaccharide and a saccharide other than fructose, glucose and disaccharides and containing less than 97.0% by mass of the aforementioned fructose, more than 1.6% by mass, and more preferably more than 1.6% by mass and 4.0% by mass or less, of the aforementioned glucose, more than 0.3% by mass, and more preferably more than 0.3% by mass and less than 3.0% of the aforementioned disaccharide, and more than 0% by mass, more preferably more than 0% by mass and less than 2.7% by mass of the aforementioned saccharide other than fructose, glucose and disaccharides, with respect to the total mass of the aforementioned solid fraction through a first cation exchange resin to obtain an eluent containing the aforementioned solid fraction;
(ii) a step of reducing minerals by treating the eluent containing the aforementioned solid fraction with a mixed resin of a second cation exchange resin and an anion exchange resin;
(iii) a step of obtaining a filtrate containing 96.0 to 98.5% by mass of the aforementioned fructose, 0.4 to 1.6% by mass of the aforementioned glucose, 0.3 to 1.2% by mass of the aforementioned disaccharide, and 0 to 1.2% by mass of the aforementioned saccharide other than fructose, glucose and disaccharides with respect to a total mass of the aforementioned solid fraction by treating the eluent containing the aforementioned solid content with a reduced amount of the aforementioned minerals with diatomaceous earth and activated carbon, followed by filtration; and
(iv) a step of concentrating the aforementioned filtrate.

### <Chromatographic separation>

In the present specification, the "raw sugar" is not particularly limited as long as it is a saccharide composition including a solid fraction composed of fructose, glucose, a disaccharide and a saccharide other than fructose, glucose and disaccharides, and containing less than 97.0% by mass of the aforementioned fructose, more than 1.6% by mass, and more preferably more than 1.6% by mass and 4.0% by mass or less, of the aforementioned glucose, more than 0.3% by mass, and more preferably more than 0.3% by mass and less than 3.0% of the aforementioned disaccharide, and more than 0% by mass, more preferably more than 0% by mass and less than 2.7% by mass of the aforementioned saccharide other than fructose, glucose and disaccharides, with respect to the total mass of the aforementioned solid fraction.

In the present specification, the sum of the contents of fructose, glucose, the disaccharide, and the saccharide other than fructose, glucose and disaccharides in the solid fraction of the raw sugar does not exceed 100% by mass with respect to the total mass of the solid fraction of the raw sugar.

Examples of the raw sugar include glucose fructose liquid sugar, fructose glucose liquid sugar or high fructose liquid sugar, and high fructose liquid sugar is preferable. In the present specification, the terms "glucose fructose liquid sugar", "fructose glucose liquid sugar" and "high fructose liquid sugar" are in conformity with the standards prescribed by the Japanese Agricultural Standards (JAS). That is, the term "glucose fructose liquid sugar" means those having a fructose content (proportion of fructose in sugar) of less than 50%, the term "fructose glucose liquid sugar" means those having a fructose content of 50% or more and less than 90%, and the term "high fructose liquid sugar" means those having a fructose content of 90% or more.

The glucose fructose liquid sugar, the fructose glucose liquid sugar, and the high fructose liquid sugar can be produced by known methods, or commercially available products may be used.

In the present specification, the "first cation exchange resin" is not particularly limited as long as it can chromatographically separate the components of the raw sugar, and examples thereof include known cation exchange resins such as a strongly acidic cation exchange resin having a styrene-based or acrylic skeleton polymer and having a sulfonic acid group as an exchange group, and a weakly acidic cation exchange resin having a carboxylic acid group, a phosphonic acid group or a phosphinic acid group as an exchange group, and a strongly acidic cation exchange resin having a styrene-based skeleton polymer and having a sulfonic acid group as an exchange group is preferable. More specifically, DIAION UBK 555 (manufactured by Mitsubishi Chemical Corporation), DIAION UBK 535 (manufactured by Mitsubishi Chemical Corporation), and the like can be mentioned.

The "first cation exchange resin" is preferably particulates of 20 to 50 mesh, and is usually used for chromatographic separation by being filled in a column.

The aforementioned "step of passing a raw sugar through a first cation exchange resin to obtain an eluent containing the aforementioned solid fraction" is a step of chromatographically separating the raw sugar using the first cation exchange resin.

Purified water such as distilled water or deionized water is preferable as a developing solution for the chromatographic separation. As chromatographic separation conditions other than the above, for example, the following can be applied:
1) Column: 100 mmϕ × 1,000 mmH to 100 mmϕ × 1,200 mmH
2) Resin layer height: 800 to 1,000 mm
3) Resin amount: 6,000 to 8,000 mL
4) Amount of raw materials loaded: 80 to 100 mL
5) Flow rate: 40 mL/min (SV = 0.4) to 50 mL/min (SV = 0.38).

The above-mentioned chromatographic separation may be carried out under heating, and can also be carried out, for example, by passing a developing solution heated to 60 to 70°C through a column heated to 60 to 70°C.

It is preferable to obtain an eluent containing all or a part of each component of the aforementioned solid fraction by fractionation into a plurality of fractions by the above-mentioned chromatographic separation.

The components of the obtained plurality of fractions can be analyzed by high performance liquid chromatography. Depending on the content of the components of each fraction, it is possible to combine a plurality of fractions so as to obtain a desired component composition. As a result, it is possible to obtain an eluent containing a solid content having a desired component composition.

### <Desalination, filtration and concentration>

Minerals can be reduced by treating the eluent containing the aforementioned solid fraction with a mixed resin of the second cation exchange resin and the anion exchange resin.

In the present specification, the "mixed resin of the second cation exchange resin and the anion exchange resin" is not particularly limited as long as it can reduce the mineral of the eluent containing the solid fraction, and examples of the cation exchange resin include known cation exchange resins such as a strongly acidic cation exchange resin having a styrene-based or acrylic skeleton polymer and having a sulfonic acid group as an exchange group, and a weakly acidic cation exchange resin having a carboxylic acid group, a phosphonic acid group or a phosphinic acid group as an exchange group, and a strongly acidic cation exchange resin having a styrene-based skeleton polymer and having a sulfonic acid group as an exchange group is preferable. Further, examples of the anion exchange resin include a known anion exchange resin such as a weakly basic anion exchange resin having a styrene-based or acrylic skeleton polymer and having a dimethylamino group as an exchange group, and a weakly basic anion exchange resin having a styrene-based skeleton polymer and having a dimethylamino group as an exchange group is preferred. More specifically, a mixed resin of a cation exchange resin (SK1B, manufactured by Mitsubishi Chemical Corporation) and an anion exchange resin (WA30, manufactured by Mitsubishi Chemical Corporation) can be mentioned.

In the present specification, the above-described "treatment with a mixed resin" is carried out, for example, by adding the mixed resin to the eluent and stirring the resulting mixture for a certain period of time. The stirring time is usually from 5 minutes to 30 minutes, and more preferably from 5 minutes to 15 minutes. The amount of the mixed resin to be used is usually preferably from 2.5 to 5.0 g with respect to 10 mL of the eluent. The treatment with the mixed resin is usually carried out at 20 to 25°C. By treating with the mixed resin, the minerals in the eluent are bound to the mixed resin by ion exchange and removed from the eluent, so that the minerals in the eluent can be reduced. Here, the reduction of the mineral is preferably carried out so as to be 0 to 0.05% by mass with respect to the amount of minerals before the treatment with the mixed resin. That is, in the present specification, the minerals may be reduced to an undetectable extent or be completely removed.

By treating the eluent containing the aforementioned solid fraction with reduced minerals with diatomaceous earth and activated carbon, followed by filtration, a filtrate containing 96.0 to 98.5% by mass of the aforementioned fructose, 0.4 to 1.6% by mass of the aforementioned glucose, 0.3 to 1.2% by mass of the aforementioned disaccharide, and 0.2 to 0.8% by mass of the aforementioned saccharide other than fructose, glucose and disaccharides with respect to the total mass of the aforementioned solid fraction can be obtained.

The treatment with the diatomaceous earth and activated carbon is performed in order to reduce impurities in the eluent containing the solid fraction in which the minerals have been reduced. Since the impurities adsorb to the diatomaceous earth and activated carbon and are removed from the eluent by such a treatment, the impurities in the eluent can be reduced. Here, it is preferable that the impurities are completely removed.

In the present specification, the "diatomaceous earth" and "activated carbon" are not particularly limited as long as they can be used for reducing the impurities, and for example, diatomaceous earth such as Radiolite and Zemlite and powdered activated carbon can be used.

In the present specification, the "treatment with the diatomaceous earth and activated carbon" is carried out, for example, by adding the diatomaceous earth and activated carbon to the eluent and stirring the resulting mixture for a certain period of time. The stirring time is usually from 5 minutes to 30 minutes, and more preferably from 5 minutes to 15 minutes. Usually, the amounts of the diatomaceous earth and activated carbon to be used are preferably 10 to 20 mg of diatomaceous earth per 10 mL of eluent and 5 to 10 mg of activated carbon per 10 mL of eluent, respectively. The treatments with the diatomaceous earth and activated carbon are usually carried out at 20 to 25°C, respectively. The addition of the diatomaceous earth and activated carbon may be carried out simultaneously or separately. In the case where they are carried out separately, the filtration step to be described later may be performed between the treatment step with the diatomaceous earth and the treatment step with the activated carbon.

By filtrating the eluent treated with the diatomaceous earth and activated carbon, a filtrate containing 96.0 to 98.5% by mass of the aforementioned fructose, 0.4 to 1.6% by mass of the aforementioned glucose, 0.3 to 1.2% by mass of the aforementioned disaccharide, and 0 to 1.2% by mass of the aforementioned saccharide other than fructose, glucose and disaccharides with respect to the total mass of the aforementioned solid fraction can be obtained.

As the above-described "filtration" process, any of natural filtration, filtration under reduced pressure (also referred to as suction filtration), pressure filtration, or centrifugal filtration can be applied. Depending on the state of diatomaceous earth and activated carbon used in the previous step and the filtration method, it is possible to use filter media such as filter paper and other tools or equipment which are themselves known.

The filtrate obtained by the above "filtration" process contains a solid fraction of the above composition, but since it usually contains moisture and the like derived from the developing solution for chromatographic separation, it contains an excess of water as compared with the desired liquid sweetener composition.

Therefore, usually, the desired liquid sweetener composition can be obtained by reducing the water content in the next concentration step.

The concentration step is not particularly limited as long as it does not adversely affect the contents of the filtrate, and a concentration method which is itself known can be applied. In the present specification, for example, boiling concentration, vacuum concentration (also referred to as concentration under reduced pressure), freeze concentration, membrane concentration, or vacuum concentration using a centrifugal evaporator can be mentioned. The above-described concentration under reduced pressure is preferably carried out under heating at 40 to 50°C.

### <Use of liquid sweetener composition>

The "liquid sweetener composition" of the present invention can be used for various foods and beverages having sweetness. Fructose is a saccharide that provides a strong sweet taste impression at low temperatures, and has a sweetness about 1.5 times as high as that of sugar at low temperatures. In addition, with regard to sweetness qualities, it has a feature of bringing sweetness and sharpness faster than sugar. Therefore, it is preferable to use it for soft drinks, sports drinks, carbonated beverages or the like that are required to bring a pleasant cooling sensation at low temperatures.

In the present specification, the term "soft drink" means a drinking liquid having an alcohol content of less than 1%, which is drinking water with flavor and fragrance.

In the present specification, the term "sports drink" means a beverage intended to efficiently replenish moisture and minerals which have been lost from the body due to perspiration or the like.

In the present specification, the term "carbonated beverage" means a beverage in which pressurized carbon dioxide is injected into water suitable for drinking.

Each of the soft drink, the sports drink, and the carbonated drink preferably contains the "liquid sweetener composition" of the present invention as a solid fraction in an amount of 0.1 to 10% by mass of the total mass of each beverage. With a content within this range, the sweetness qualities of the "liquid sweetener composition" of the present invention is moderately expressed.

One aspect of the "liquid sweetener composition" of the present invention is an inexpensive alternative to crystalline fructose which is itself known. Therefore, it can alternatively be used in the situation where crystalline fructose is used, and the same also applies to its method of use and the effect on sweetness qualities.

The soft drink, the sports drink and the carbonated drink described above can be produced by adding the "liquid sweetener composition" of the present invention according to their formulations, respectively.

### EXAMPLES

Hereinafter, the present invention will be described in more detail with reference to specific examples. However, the present invention is not limited in any way by the following examples. Further, unless otherwise specified, in the examples, "%" means "% by mass".

### [Test Examples 1 to 4]

### (Sensory evaluation)

For each sample, the sweetness qualities in an aqueous solution (solid content: 5%) at a solution temperature of 5°C was evaluated for the following evaluation items by five panelists using the sweetness standard. If it was equivalent to that of an aqueous solution containing crystalline fructose, "5" points were given, whereby any one of 1, 2, 3, 4 and 5 points was given.
- Development speed of sweetness: evaluation by points 1 (slow) to 5 (fast: equivalent to crystalline fructose)
- Sharpness (disappearance speed) of sweetness: evaluation by points 1 (slow) to 5 (fast: equivalent to crystalline fructose)

### <Test Example 1>

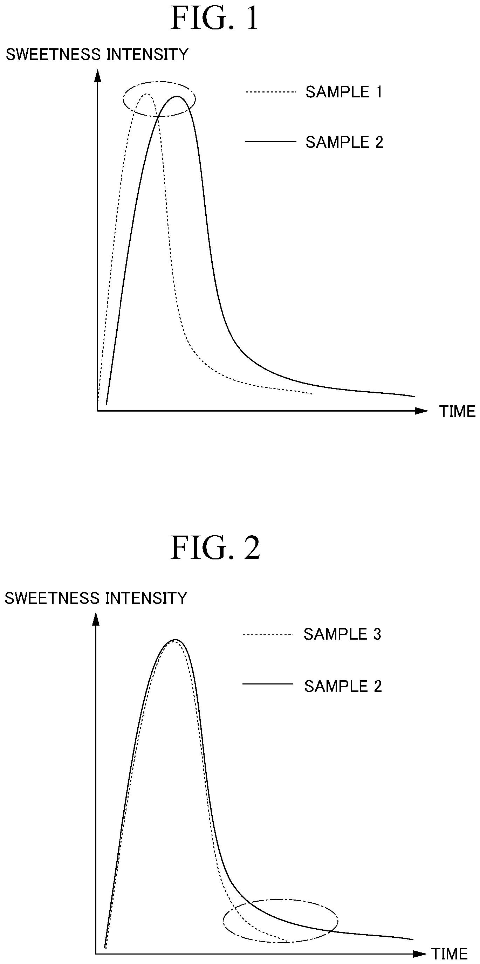

In order to evaluate the influence of glucose on the sweetness qualities, samples having the compositions shown in Table 1 were produced, and the above sensory evaluation was performed on each sample. The results of averaging the evaluation of each panelist are shown in the graph of FIG. 1. In the present test example, a sample 1 was produced by adding 1.5 parts by mass of maltose (manufactured by Katayama Chemical Industries Co., Ltd.) as a disaccharide to 98.5 parts by mass of crystalline fructose (manufactured by Tate & Lyle PLC) and mixing the resultant so as to obtain a homogeneous mixture, followed by addition of purified water so that the solid content concentration became 5% with respect to the total mass of the sample 1. Further, in Sample 2, high fructose liquid sugar (HFS-95, manufactured by Japan Corn Starch Co., Ltd.) was used.

**[Table 1]**

| | Sample 1 | Sample 2 |
|---|---|---|
| Fructose | 98.5% | 96.0% |
| Glucose | 0.0% | 2.0% |
| Disaccharide | 1.5% | 1.5% |
| Saccharide other than fructose, glucose and disaccharides | 0.0% | 0.5% |

From FIG. 1, it can be understood that the development of sweetness was slower in the sample 2 to which glucose was added, as compared with the sample 1. In other words, glucose was found to delay the development of sweetness.

### <Test Example 2>

In order to evaluate the influence of a disaccharide on the sweetness qualities, samples having compositions shown in Table 2 were produced, and the above sensory evaluation was performed on each sample. The results of averaging the evaluation of each panelist are shown in the graph of FIG. 2. In the present test example, a sample 3 was produced by adding 2.0 parts by mass of glucose (D-glucose, manufactured by Katayama Chemical Industries Co., Ltd.) to 98.0 parts by mass of crystalline fructose (manufactured by Tate & Lyle PLC) and mixing the resultant so as to obtain a homogeneous mixture, followed by addition of purified water so that the solid content concentration became 5% with respect to the total mass of the sample 3. Further, the sample 2 is the same as the sample used in Test Example 1.

**[Table 2]**

| | Sample 3 | Sample 2 |
|---|---|---|
| Fructose | 98.0% | 96.0% |
| Glucose | 2.0% | 2.0% |
| Disaccharide | 0.0% | 1.5% |
| Saccharide other than fructose, glucose and disaccharides | 0.0% | 0.5% |

From FIG. 2, it can be understood that the disappearance of sweetness in the sample 2 having a higher content of disaccharides in which maltose was a main component (containing 95% by mass or more) with respect to the composition of the sample 3 was slower, as compared with the sample 3. In other words, the disaccharide was found to delay the disappearance of sweetness.

### <Test Example 3>

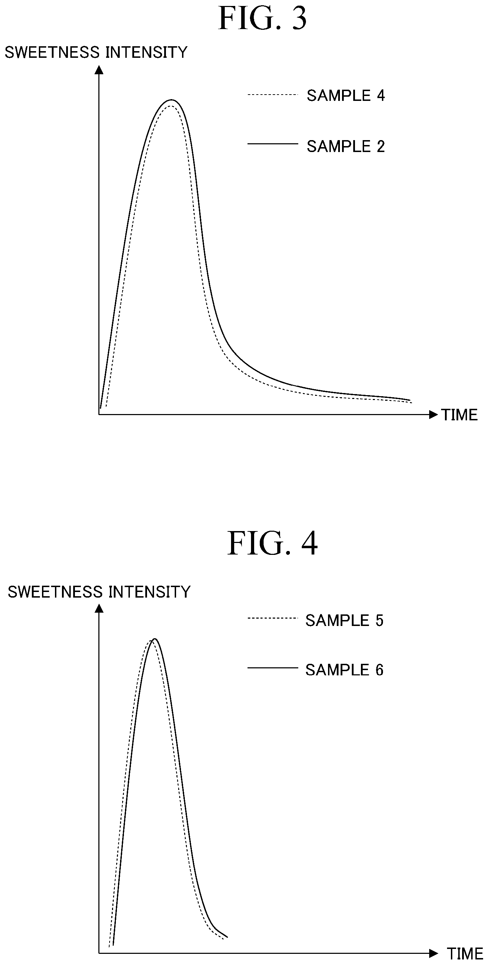

In order to evaluate the influence of saccharide other than fructose, glucose and disaccharide on the sweetness qualities, samples having compositions shown in Table 3 were produced, and the above sensory evaluation was performed on each sample. The results of averaging the evaluation of each panelist are shown in the graph of FIG. 3. In the present test example, a sample 4 was produced by adding 2.0 parts by mass of glucose (D-glucose, manufactured by Katayama Chemical Industries Co., Ltd.) and 1.5 parts by mass of maltose (manufactured by Katayama Chemical Industries Co., Ltd.) as a disaccharide to 96.5 parts by mass of crystalline fructose (manufactured by Tate & Lyle PLC) and mixing the resultant so as to obtain a homogeneous mixture, followed by addition of purified water so that the solid content concentration became 5% with respect to the total mass of the sample 4. Further, the sample 2 is the same as the sample used in Test Example 1.

**[Table 3]**

| | Sample 4 | Sample 2 |
|---|---|---|
| Fructose | 96.5% | 96.0% |
| Glucose | 2.0% | 2.0% |
| Disaccharide | 1.5% | 1.5% |
| Saccharide other than fructose, glucose and disaccharides | 0.0% | 0.5% |

From FIG. 3, it can be understood that the sample 4 and the sample 2 have equivalent sweetness qualities, although the contents of saccharides other than fructose, glucose and disaccharides of sample 4 are different from the contents of saccharides other than fructose, glucose and disaccharides of sample 2. In other words, it was found that saccharides other than fructose, glucose and disaccharides had no effect on the sweetness qualities.

### <Text Example 4>

In order to compare the sweetness qualities of the crystalline fructose and the sweetness qualities of a sample having the same solid content composition as the solid content composition of the liquid sweetener composition belonging to the present invention, samples having compositions shown in Table 4 were produced, and the above sensory evaluation was performed on each sample. The results of averaging the evaluation of each panelist are shown in the graph of FIG. 4. In the present test example, a sample 5 was produced by using crystalline fructose (manufactured by Tate & Lyle PLC) and adding purified water so that the solid content concentration became 5% with respect to the total mass of the sample 5. Further, a sample 6 was produced by adding 1.2 parts by mass of glucose (D-glucose, manufactured by Katayama Chemical Industries Co., Ltd.) and 0.6 parts by mass of maltose (manufactured by Katayama Chemical Industries Co., Ltd.) as a disaccharide to 98.2 parts by mass of crystalline fructose (manufactured by Tate & Lyle PLC) and mixing the resultant so as to obtain a homogeneous mixture, followed by addition of purified water so that the solid content concentration became 5% with respect to the total mass of the sample 4.

**[Table 4]**

| | Sample 5 | Sample 6 |
|---|---|---|
| Fructose | 100% | 98.2% |
| Glucose | 0.0% | 1.2% |
| Disaccharide | 0.0% | 0.6% |
| Saccharide other than fructose, glucose and disaccharides | 0.0% | 0.0% |

From FIG. 4, it can be understood that the sample 5 and the sample 6 composed only of crystalline fructose as a solid content have equivalent sweetness qualities. In other words, it was found that the composition of the solid content of the liquid sweetener composition belonging to the present invention has the sweetness qualities equivalent to the sweetness qualities of crystalline fructose.

### [Test Examples 5 and 6]

### (Sensory evaluation)

For each sample, the sweetness qualities in an aqueous solution (solid content: 5%) at a solution temperature of 5°C was evaluated for the following evaluation items by five panelists using the sweetness standard.
- Development speed of sweetness: It was evaluated by defining the sweetness of crystalline fructose as 5, and the sweetness of commercially available high fructose liquid sugar as 1.
- Sharpness (disappearance speed) of sweetness: It was evaluated by defining the sweetness of crystalline fructose as 5, and the sweetness of commercially available high fructose liquid sugar as 1.

### <Test Example 5>

In order to define the allowable range of the content of glucose for developing sweetness equivalent to that of crystalline fructose, samples having the compositions shown in Table 5 were produced, and the above sensory evaluation was performed on each sample. The results of averaging the evaluations of the respective panelists are shown in Table 5. In the present test example, each sample was produced by adding glucose (D-glucose, manufactured by Katayama Chemical Industries Co., Ltd.) to crystalline fructose (manufactured by Tate & Lyle PLC) so as to obtain the composition ratio shown in the table, and mixing the resultant so as to obtain a homogeneous mixture. Thereafter, purified water was added so that the solid content concentration became 5% with respect to the total mass of each sample, thereby producing each sample.

**[Table 5]**

| | | Sample 5 | Sample 7 | Sample 8 | Sample 9 | Sample 10 | Sample 11 |
|---|---|---|---|---|---|---|---|
| Sugar composition | Fructose | 100% | 99.6% | 99.2% | 98.8% | 98.4% | 98.0% |
| | Glucose | 0.0% | 0.4% | 0.8% | 1.2% | 1.6% | 2.0% |
| Evaluation of sweetness development | | 5 | 5 | 5 | 5 | 4 | 2 |

From Table 5, it was found that when the content of glucose is from 0.4 to 1.6% by mass, more preferably from 0.4 to 1.2% by mass, with respect to the total mass of the solid content, the sweetness equivalent to that of crystalline fructose was developed.

### <Test example 6>

In order to define the allowable range of the content of disaccharide for having the sharpness of sweetness equivalent to that of crystalline fructose, samples having the compositions shown in Table 6 were produced, and the above sensory evaluation was performed on each sample. The results of averaging the evaluations of the respective panelists are shown in Table 6. As a disaccharide, maltose (maltose, manufactured by Katayama Chemical Industries Co., Ltd.) was used. In the present test example, each sample was produced by adding the above maltose to crystalline fructose (manufactured by Tate & Lyle PLC) so as to obtain a composition ratio shown in the table, and mixing the resultant so as to obtain a homogeneous mixture. Thereafter, purified water was added so that the solid content concentration became 5% with respect to the total mass of each sample, thereby producing each sample.

**[Table 6]**

| | | Sample 5 | Sample 12 | Sample 13 | Sample 14 | Sample 15 | Sample 16 |
|---|---|---|---|---|---|---|---|
| Sugar composition | Fructose | 100% | 99.7% | 99.4% | 99.1% | 98.8% | 98.5% |
| | Glucose | 0.0% | 0.3% | 0.6% | 0.9% | 1.2% | 1.5% |
| Evaluation of sharpness of sweetness | | 5 | 5 | 5 | 4 | 4 | 2 |

From Table 6, it was found that when the content of disaccharide is from 0.3 to 1.2% by mass, more preferably from 0.3 to 0.6% by mass, with respect to the total mass of the solid content, the sharpness of sweetness equivalent to that of crystalline fructose is obtained.

From the results shown above, in the sweetener composition containing fructose, glucose and a disaccharide, it was found that by controlling the content of glucose within the range of 0.4 to 1.6% by mass, more preferably 0.4 to 1.2% by mass, and the content of disaccharide within the range of 0.3 to 1.2% by mass, more preferably 0.3 to 0.6% by mass, with respect to the total mass of the solid content, the sweetener composition has the sweetness qualities equivalent to those of crystalline fructose.

### <Production of liquid sweetener composition>

### [Example 1]

### (1) Chromatographic separation

100 mL of high fructose liquid sugar (HFS-95, manufactured by Japan Corn Starch Co., Ltd.) heated to 65°C was applied with a pipetter to a column charged with a cation exchange resin (DIAION UBK 555, manufactured by Mitsubishi Chemical Corporation) and heated to 65°C with an electric heater, and chromatography was performed under the following conditions using distilled water heated to 65°C as a developing solution in a water bath incubator. After about 60 minutes, the eluent from the column was fractionated every 5 minutes and collected. The components of each recovered fraction were analyzed by high performance liquid chromatography. The results are shown in Table 7.

### (Conditions of chromatography)

1) Column: 100 mmϕ × 1,200 mmH
2) Resin: DIAION UBK 555, manufactured by Mitsubishi Chemical Corporation
3) Resin layer height: 1,000 mm
4) Resin amount: 8,000 mL
5) Amount of raw materials loaded: 100 mL
6) Developing solution: distilled water
7) Flow rate: about 50 mL/min (SV = 0.38)

### (Measurement conditions by high performance liquid chromatography)

1) Apparatus: device name, manufactured by JASCO Corporation
2) Detector: RI-930, Intelligent RI Detector, manufactured by JASCO Corporations
3) Column: 8 mmϕ × 300 mmH, manufactured by Shimadzu GLC Ltd.
4) Resin: MCI™GEL CK08EC (cation exchange resin), manufactured by Mitsubishi Chemical Corporation
5) Column temperature: 85°C
6) Mobile phase: distilled water
7) Flow rate: 0.4 mL/min
8) Injection volume: shown in Table 7.

**[Table 7]**

| Fraction No. | Brix (%) | Fructose (%) | Glucose (%) | Disaccharide (%) | Other saccharide (%) | Injection volume (µL) |
|---|---|---|---|---|---|---|
| 1 | 7.1 | 97.6 | 1.5 | 0.26 | 0.64 | 6 |
| 2 | 6.7 | 98.34 | 1.06 | 0.16 | 0.44 | 6 |
| 3 | 5.7 | 98.91 | 0.76 | 0.09 | 0.24 | 7 |
| 4 | 4.2 | 98.83 | 0.73 | 0.07 | 0.37 | 10 |
| 5 | 2.8 | 98.26 | 0.35 | 0.07 | 0.32 | 14 |
| 6 | 1.8 | 98.34 | 0.2 | 0.04 | 0.42 | 22 |
| 7 | 1.1 | 97.43 | 0.59 | 0.05 | 0.93 | 36 |

### (2) Desalination, filtration and concentration

The fractions No. 2 to 6 obtained by the chromatographic separation described above were collected, a mixed resin of a cation exchange resin (SK1B, manufactured by Mitsubishi Chemical Corporation) (250 g) and an anion exchange resin (WA30, manufactured by Mitsubishi Chemical Corporation) (250 g) was added thereto, and the resulting mixture was stirred for 10 minutes and subjected to a desalination treatment, followed by filtration through filter paper No. 5A. Diatomaceous earth (1 g of Radiolite and 1 g of Zemlite) was added to the obtained filtrate, and after stirring for 10 minutes, the resulting mixture was filtered with filter paper No. 5A. Powdered activated carbon (1 g) was further added to the resulting filtrate, and after stirring for 5 minutes to remove impurities, the resulting mixture was subjected to filtration under reduced pressure using filter paper No. 5C. The obtained filtrate was concentrated under reduced pressure with heating at about 50°C using a centrifugal evaporator (N-1110, manufactured by Tokyo Rikakikai Co., Ltd.) to obtain 72.6 g (Brix: 77.2%; solid content: about 56.05 g) of a liquid sweetener composition. The obtained liquid sweetener composition had a composition composed of 98.5% by mass of fructose, 0.7% by mass of glucose, 0.3% by mass of a disaccharide, and 0.5% by mass of a saccharide other than fructose, glucose and disaccharides, with respect to the total mass of the solid content.

### <Production of flavored beverage>

### [Example 2]

The liquid sweetener composition obtained in Example 1, granulated sugar, sodium chloride, citric acid, potassium chloride, calcium lactate, vitamin C and a peach flavor were mixed in the formulation shown in Table 8 to prepare a flavored beverage (1,000 g).

### [Reference Example 1]

A flavored beverage was produced in the same manner as in Example 2, except that the liquid sweetener composition of Example 2 was replaced with crystalline fructose (fructose: 99.97%, manufactured by Tate & Lyle PLC).

### [Comparative Example 1]

A flavored beverage was produced in the same manner as in Example 2 except that the liquid sweetener composition of Example 2 was replaced with high fructose liquid sugar (HFS-95, manufactured by Japan Corn Starch Co., Ltd., water content: 25%).

### (Sensory evaluation)

For each flavored beverage, the sweetness qualities at a temperature of 5°C were evaluated by five panelists for the following evaluation items using the sweetness standard. If it was equivalent to that of a flavored beverage containing crystalline fructose, "5" points were given, whereby any one of 1, 2, 3, 4 and 5 points was given. It was evaluated as "E", "D", "C", "B", or "A", if the average score of 5 panelists was less than 1 point, 1 point or more but less than 2 points, 2 points or more but less than 3 points, 3 points or more but less than 4 points, or 4 points or more but less than 5 points, respectively. The results are shown in Table 8.
- Development speed of sweetness: evaluation by points 1 (slow) to 5 (fast: equivalent to crystalline fructose)
- Sharpness (disappearance speed) of sweetness: evaluation by points 1 (slow) to 5 (fast: equivalent to crystalline fructose)
- Magnitude of sweetness: 1 (small: equivalent to water) to 5 (large: equivalent to crystalline fructose)
- Flavor: 1 (poor) to 5 (satisfactory: equivalent to crystalline fructose)
- Sourness: 1 (poor) to 5 (satisfactory: equivalent to crystalline fructose)

**[Table 8]**

| | | Example 2 | Ref. Ex. 1 | Comp. Ex. 1 |
|---|---|---|---|---|
| Composition | Liquid sweetener composition of Example 1 | 28.5 g | - | - |
| | Crystalline fructose | - | 21.5 g | - |
| | High fructose liquid sugar | - | - | 29.9 g |
| | Granulated sugar | 21.5 g | 21.5 g | 21.5 g |
| | Sodium chloride | 0.7 g | 0.7 g | 0.7 g |
| | Citric acid | 0.7 g | 0.7 g | 0.7 g |
| | Potassium chloride | 0.1 g | 0.1 g | 0.1 g |
| | Calcium lactate | 0.1 g | 0.1 g | 0.1 g |
| | Vitamin C | 0.1 g | 0.1 g | 0.1 g |
| | Peach flavor | 1.0 g | 1.0 g | 1.0 g |
| | Purified water | Balance | Balance | Balance |
| | Total | 1,000 g | 1,000 g | 1,000 g |
| Sensory evaluation | Intensity of sweetness | A | A | A |
| | Development speed of sweetness | A | A | B |
| | Sharpness of sweetness | A | A | C |
| | Flavor | A | A | B |
| | Sourness | A | A | c |

As shown in Table 8, the flavored beverage containing crystalline fructose of Reference Example 1 was a beverage exhibiting a rapid development of sweetness, satisfactory sharpness of sweetness, sufficient magnitude of sweetness, satisfactory flavor and refreshing sourness.

Like the flavored beverage containing crystalline fructose of Reference Example 1, the flavored beverage of Example 2 containing the liquid sweetener composition of the present invention was a beverage exhibiting a rapid development of sweetness, satisfactory sharpness of sweetness, sufficient magnitude of sweetness, satisfactory flavor and refreshing sourness.

On the other hand, the flavored beverage containing the high fructose liquid sugar of Comparative Example 1 was a beverage exhibiting a slightly slow development of sweetness, poor sharpness of sweetness, sufficient magnitude of sweetness and satisfactory flavor, but with somewhat strong lingering sourness.

### INDUSTRIAL APPLICABILITY

The present invention can provide a liquid sweetener composition having sweetness qualities equivalent to those of crystalline fructose at low cost and therefore can be used in the field of food and drink.

## Claims

1. A liquid sweetener composition comprising:
a solid content composed of fructose, glucose, a disaccharide and a saccharide other than fructose, glucose and disaccharides; and
water,
wherein said liquid sweetener composition comprises 75% by mass or more of said solid content and 25% by mass or less of said water with respect to a total mass of said liquid sweetener composition, and
comprises 96.0 to 98.5% by mass of said fructose, 0.4 to 1.6% by mass of said glucose, 0.3 to 1.2% by mass of said disaccharide, and 0 to 1.2% by mass of said saccharide other than fructose, glucose and disaccharides, with respect to a total mass of said solid content.

2. The liquid sweetener composition according to Claim 1, comprising 97.0 to 98.5% by mass of said fructose, 0.4 to 1.2% by mass of said glucose, 0.3 to 0.6% by mass of said disaccharide and 0 to 1.2% by mass of said saccharide other than fructose, glucose and disaccharides, with respect to a total mass of said solid content.

3. The liquid sweetener composition according to Claim 1 or 2, wherein said disaccharide is a saccharide comprising maltose as a main component.

4. A method for producing a liquid sweetener composition which is a method for producing the liquid sweetener composition according to Claim 1,
the said method comprising:
a step of passing a raw sugar including a solid content composed of fructose, glucose, a disaccharide and a saccharide other than fructose, glucose and disaccharides and containing less than 97.0% by mass of said fructose, more than 1.6% by mass of said glucose, more than 0.3% by mass of said disaccharide, and more than 0% by mass of said saccharide other than fructose, glucose and disaccharides, with respect to a total mass of said solid content through a first cation exchange resin to obtain an eluent containing said solid content;
a step of reducing minerals by treating the eluent containing said solid content with a mixed resin of a second cation exchange resin and an anion exchange resin;
a step of obtaining a filtrate containing 96.0 to 98.5% by mass of said fructose, 0.4 to 1.6% by mass of said glucose, 0.3 to 1.2% by mass of said disaccharide, and 0 to 1.2% by mass of said saccharide other than fructose, glucose and disaccharides with respect to a total mass of said solid content by treating the eluent containing said solid content with a reduced amount of said minerals with diatomaceous earth and activated carbon, followed by filtration; and
a step of concentrating said filtrate.

5. A soft drink comprising the liquid sweetener composition according to any one of Claims 1 to 3 as a solid content in an amount of 0.1 to 10% by mass of a total mass of the soft drink.

6. A sports drink comprising the liquid sweetener composition according to any one of Claims 1 to 3 as a solid content in an amount of 0.1 to 10% by mass of a total mass of the sports drink.

7. A carbonated beverage comprising the liquid sweetener composition according to any one of Claims 1 to 3 as a solid content in an amount of 0.1 to 10% by mass of a total mass of the carbonated beverage.
